# EUROPEAN PATENT SPECIFICATION

(11) **EP 3 904 464 B1**
(45) Date of publication and mention of the grant of the patent: **25.10.2023**
(21) Application number: 19904829.9
(22) Date of filing: 19.12.2019
(51) Int. Cl.: C09D 5/02, C09D 133/00, C09D 175/04, C09D 7/20, C09D 7/65

(54) **WATER-BASED COATING COMPOSITION AND METHOD FOR FORMING COATING FILM**
BESCHICHTUNGSZUSAMMENSETZUNG AUF WASSERBASIS UND VERFAHREN ZUR HERSTELLUNG EINES BESCHICHTUNGSFILMS
COMPOSITION DE REVÊTEMENT À BASE D'EAU ET PROCÉDÉ DE FORMATION D'UN FILM DE REVÊTEMENT

(30) Priority: 27.12.2018 JP 2018245543
(43) Date of publication of application: 03.11.2021
(73) Proprietor: Nippon Paint Industrial Coatings Co., Ltd., Tokyo 140-8675 (JP)
(72) Inventor: AZECHI, Kensaku, Osaka-shi, Osaka 531-8511 (JP); FURUYAMA, Naoki, Osaka-shi, Osaka 531-8511 (JP)
(74) Representative: Mewburn Ellis LLP
(86) International application number: PCT/JP2019/049813
(87) International publication number: WO 2020/137796

(56) References cited:
- WO-A1-96/40511
- WO-A1-2005/111162
- CN-A- 102 775 868
- CN-A- 104 479 529
- JP-A- H0 948 945
- JP-A- 2002 172 360
- JP-A- 2009 006 293
- JP-A- 2016 017 116
- US-A1- 2007 049 683

## Description

### TECHNICAL FIELD

The present invention relates to an aqueous coating composition and a method for forming a coating film.

### BACKGROUND ART

In recent years, the awareness of environmental load reduction has increased, and replacement with environmentally friendly products has been required. In the field of coating materials, for example, it is required to reduce the amount of an organic solvent used, and such a requirement can be satisfied with an aqueous coating composition using water as a solvent. Further, in the field of automobiles and the like, a method is employed where a bake-curing type coating composition is applied to an article, heated at a high temperature and cured to form a coating film.

On the other hand, when coating a large and thick article, for example, a heavy vehicle, especially a railroad vehicle, it is difficult to perform bake-curing due to the high heat capacity of the article, and it is difficult to use a bake-curing type coating composition. Therefore, when coating such an article, a normal temperature film-forming type coating composition has been selected which does not require a high temperature heating step and is capable of forming a coating film at normal temperature.

As a normal temperature coating film-forming type coating composition, for example, an isocyanate-curing type two-component curing type coating composition is known (see Patent Literature 1 and 2). Such a coating composition is a two-component curing type coating composition, which comprises a solution of a compound with two or more isocyanate groups and a solution of a compound with two or more functional groups such as hydroxyl group or the like that react with isocyanate group. The coating composition is to form a coating film by a curing reaction between isocyanate group and hydroxyl group or the like. Further, the coating composition can undergo a curing reaction (a coating film formation) even at normal temperature and does not require thermal curing.

Patent Literature 3 and 4 describe aqueous coating compositions. Patent Literature 5-7 describe paints and basecoat compositions having good appearance properties.

### CITATION LIST

### PATENT LITERATURE

Patent Literature 1: JP-A-2008-101140
Patent Literature 2: JP-A-2018-154751
Patent Literature 3: CN 102 775 868
Patent Literature 4: US 2007/049683
Patent Literature 5: WO 2005/111162
Patent Literature 6: CN 104 479 529
Patent Literature 7: WO 96/40511

### SUMMARY OF INVENTION

### TECHNICAL PROBLEMS

However, in the case of heavy vehicles such as railroad vehicles, since each of the articles to be coated is huge, a coating booth used in the automobile field or the like is not employed when applying the coating composition, and the heavy vehicles are coated at a site where they are manufactured. In this case, problems with the coating workability and/or the finished appearance of a coating film has occurred due to the changes in the environment such as ambient temperature or humidity. For example, under low temperature and/or high humidity conditions, sagging of the applied coating composition occurred because of the slow evaporation rate of water as a solvent, whereas under high temperature and/or low humidity conditions, the resulting coating film had poor finished appearance.

The above-cited Patent Literature 1 describes an aqueous coating material comprising a multilayer structure type synthetic resin emulsion (A) having a specific structure, a hydrophilic solvent (B), and a hydrophobic solvent (C). Patent Literature 1 describes that the above configuration enhances the film-forming stability (paragraphs [0004] to [0005]). The above-cited Patent Literature 2 describes an aqueous base coating material comprising acrylic based core-shell particles, a melamine resin, an alkali-swelling type viscosity modifier, a hydrophobic organic solvent, and a hydrophilic organic solvent. In Patent Literature 2, it is described that a coating film with a high solid concentration, and superiority in anti-sagging property and appearance quality can be formed with the above configuration (paragraphs [0005] to [0006], and so on.).

As described in Patent Literatures 1 and 2, various studies have been conventionally conducted on normal temperature curing type aqueous coating compositions. On the other hand, even with aqueous coating compositions, higher levels of performance in terms of coating workability and finished appearance have been required, and it is still difficult to satisfy all of the required performances.

The present invention is to solve the above-described conventional problems, and the object of the present invention is to provide an aqueous coating composition having good coating workability and good finished appearance, and a method for forming a coating film.

### SOLUTIONS TO PROBLEMS

In order to solve the above-described problems, the present invention provides the following embodiments.
[1] An aqueous coating composition comprising an aqueous base component (I) and a water-dispersible curing agent (II),
   wherein the aqueous base component (I) comprises an aqueous acrylic resin dispersion (A) and an aqueous polyolefin wax dispersion (B),
   wherein the water-dispersible curing agent (II) comprises a water-dispersible polyisocyanate (C),
   wherein at least one of the aqueous base component (I) and the water-dispersible curing agent (II) comprises an organic solvent (D) having a solubility in water at 20°C of 0.1 to 14 g/100gH₂O and a boiling point in the range of 150 to 230°C,
   wherein the aqueous acrylic resin dispersion (A) has a hydroxyl value in the range of 5 to 200 mgKOH/g, an acid value in the range of 5 to 100 mgKOH/g, and a number-average molecular weight in the range of 1,000 to 100,000, and
   wherein the aqueous polyolefin wax dispersion (B) has an average particle diameter in the range of 50 to 1,000 nm.
[2] The above aqueous coating composition, wherein the organic solvent (D) comprises at least one species selected from the group consisting of an aliphatic ester-based organic solvent, an alicyclic ester-based organic solvent, and a cyclic ketone-based organic solvent.
[3] The above aqueous coating composition, wherein the organic solvent (D) is contained in the water-dispersible curing agent (II).
[4] The above aqueous coating composition, wherein the active ingredient content of the aqueous polyolefin wax dispersion (B) is 0.35 to 4.20 parts by mass with respect to 100 parts by mass of the resin solid content of the aqueous acrylic resin dispersion (A).
[5] The above aqueous coating composition, wherein the content of the organic solvent (D) is 7 to 45 parts by mass with respect to 100 parts by mass of the total resin solid content of the aqueous acrylic resin dispersion (A) and the water-dispersible polyisocyanate (C).
[6] A method for forming a coating film comprising a step of forming a coating film by applying the above aqueous coating composition to an article and then curing the aqueous coating composition to form a coating film.
[7] The method for forming a coating film, wherein the article is an industrial machine, a construction machine, a railroad vehicle, a hull, a building or a constructed structure.

### ADVANTAGEOUS EFFECTS OF INVENTION

The aqueous coating composition is a two-component type aqueous coating composition, which is capable of achieving both coating workability and finished appearance of a coating film at high level.

### DESCRIPTION OF EMBODIMENTS

The aqueous coating composition comprises an aqueous base component (I) and a water-dispersible curing agent (II). The aqueous base component (I) comprises an aqueous acrylic resin dispersion (A) and an aqueous polyolefin wax dispersion (B), and the water-dispersible curing agent (II) comprises a water-dispersible polyisocyanate (C). At least one of the aqueous base component (I) and the water-dispersible curing agent (II) comprises an organic solvent (D) which has a solubility in water at 20°C of 0.1 to 14 g/100gH₂O.

In the following, the respective components are described in detail.

### Aqueous acrylic resin dispersion (A)

The aqueous acrylic resin dispersion (A) is a coating film-forming resin contained in the aqueous base component (I). The aqueous acrylic resin dispersion (A) is required to have a hydroxyl value in the range of 5 to 200 mgKOH/g, an acid value in the range of 5 to 100 mgKOH/g, and a number-average molecular weight in the range of 1,000 to 100,000. The aqueous acrylic resin dispersion (A) is not particularly limited as long as it satisfies the above conditions. Such an aqueous acrylic resin dispersion (A) can be prepared by polymerizing a monomer mixture comprising an ethylenically unsaturated monomer.

As the ethylenically unsaturated monomer, a mixture can be used that comprises a hydroxyl group-containing ethylenically unsaturated monomer that is necessary for obtaining the above-mentioned hydroxyl value, a carboxyl group-containing ethylenically unsaturated monomer that is necessary for obtaining the above-mentioned acid value, and other monomers in a ratio in which the above-mentioned properties can be attained.

Examples of the hydroxyl group-containing ethylenically unsaturated monomer include 2-hydroxyethyl (meth)acrylate, 2-hydroxypropyl (meth)acrylate, 4-hydroxybutyl (meth)acrylate, and ε-caprolactone-modified (meth)acrylic monomers. Examples of the ε-caprolactone-modified (meth)acrylic monomers include PLACCEL FA-1, PLACCEL FA-2, PLACCEL FA-3, PLACCEL FA-4, PLACCEL FA-5, PLACCEL FM-1, PLACCEL FM-2, PLACCEL FM-3, PLACCEL FM-4, and PLACCEL FM-5 manufactured by Daicel Chemical Industries, Ltd. In the present description, (meth)acrylic acid means acrylic acid and methacrylic acid.

Examples of the carboxyl group-containing ethylenically unsaturated monomer include carboxylic acid monomers such as (meth)acrylic acid, 2-ethylpropenic acid, crotonic acid, maleic acid, fumaric acid, and itaconic acid, or dicarboxylic acid monoester monomers thereof. Acrylic acid, methacrylic acid and the like are preferable as the carboxyl group-containing ethylenically unsaturated monomer. They may be used singly or two or more of them may be used in combination.

Examples of said other ethylenically unsaturated monomers include styrenes such as styrene and α-methylstyrene; (meth)acrylates such as methyl (meth)acrylate, ethyl (meth)acrylate, propyl (meth)acrylate, and n-, i- and t-butyl (meth)acrylates, 2-ethylhexyl (meth)acrylate, and lauryl (meth)acrylate; and amides such as (meth)acrylamide.

The aqueous acrylic resin dispersion (A) can be prepared by performing the polymerization reaction of the monomer mixture in the absence of solvent or in the presence of a suitable organic solvent, dropping and mixing the resulting mixture in water, and removing excess solvent if necessary.

A polymerization initiator may be used in the polymerization reaction. As the polymerization initiator, for example, an initiator that is used in this technical field as a radical polymerization initiator can be used. Specific examples of the polymerization initiator include organic peroxides such as benzoyl peroxide, t-butyl peroxide and cumene hydroperoxide, and organic azo compounds such as azobiscyanovaleric acid and azoisobutyronitrile.

The polymerization reaction can be carried out at a temperature of 80 to 140°C, for example. The polymerization reaction time may be appropriately chosen according to the polymerization temperature and the reaction scale, and the polymerization reaction can be carried out for 1 to 8 hours, for example. The polymerization reaction can be performed by an operation commonly performed by those skilled in the art. For example, polymerization can be performed by adding a monomer mixture containing an ethylenically unsaturated monomer and a polymerization initiator dropwise to a heated organic solvent. The organic solvent that can be used for the polymerization is not particularly limited, and one having a boiling point of about 60 to 250°C is preferable. Examples of organic solvents that can be suitably used include water-insoluble organic solvents such as butyl acetate, xylene, toluene, methyl isobutyl ketone, propylene glycol, dipropylene glycol dimethyl ether, methyl ether acetate; and water-soluble organic solvents such as tetrahydrofuran, ethanol, methanol, propanol, isopropanol, 2-butanol, t-butyl alcohol, dioxane, methyl ethyl ketone, ethylene glycol, ethylene glycol monobutyl ether, 2-methoxypropanol, 2-butoxypropanol, diethylene glycol monobutyl ether, butyl diglycol, N-methylpyrrolidone, ethylene carbonate, and propylene carbonate.

At least a part of the acid groups contained in the acrylic resin obtained by the polymerization may be neutralized by adding a neutralizer to the acrylic resin. This step can satisfactorily impart water dispersibility to the acrylic resin. The neutralizer is not particularly limited as long as it is commonly used to neutralize acid groups contained in a water-dispersible resin composition at the time of its preparation. Examples thereof include organic amines such as monomethylamine, dimethylamine, trimethylamine, triethylamine, diisopropylamine, monoethanolamine, diethanolamine, and dimethylethanolamine, and inorganic bases such as sodium hydroxide, potassium hydroxide, and lithium hydroxide. These neutralizers may be used singly or two or more of them may be used in combination.

The aqueous acrylic resin dispersion (A) can be prepared by mixing water with the optionally neutralized acrylic resin, or mixing the acrylic resin with water. In the preparation of the aqueous acrylic resin dispersion (A), excess organic solvent may be removed, if necessary, before the addition of the neutralizer or after the dispersion in water.

The aqueous acrylic resin dispersion (A) has a hydroxyl value in the range of 5 to 200 mgKOH/g. When the hydroxyl value is less than 5 mgKOH/g, the reactivity with the water-dispersible polyisocyanate (C) decreases, and the physical strength of a resulting coating film may decrease. When the hydroxyl value exceeds 200 mgKOH/g, a resulting coating film may deteriorate in water resistance.

The aqueous acrylic resin dispersion (A) has an acid value in the range of 5 to 100 mgKOH/g. If the acid value is out of the above-mentioned range, the physical strength of a resulting coating film may decrease. In addition, in the present description, the acid value and the hydroxyl value are both in terms of solid content, and are measured by the methods in accordance with JIS K 0070.

The aqueous acrylic resin dispersion (A) has a number-average molecular weight in the range of 1,000 to 100,000. If the number-average molecular weight of the aqueous acrylic resin dispersion (A) is less than 1,000, the physical strength of a resulting coating film may decrease, and if it exceeds 100,000, the smoothness of a resulting coating film may decrease. In the present description, the number-average molecular weight is a value obtained by converting a result of a measurement by gel permeation chromatography (GPC), using polystyrene standards.

A commercially available product may be used as the aqueous acrylic resin dispersion (A). The commercially available product is not particularly limited, and examples thereof include the MACRYNAL Series such as MACRYNAL VSM6299/42WA (manufactured by Surface Specialties), the BAYHYDROL Series such as BAYHYDROL XP2470 (manufactured by Bayer AG), the BURNOCK Series such as BURNOCK WD-551 (manufactured by DIC Corporation), and the NeoCryl Series such as NeoCryl XK-555 (manufactured by DSM).

### Aqueous polyolefin wax dispersion (B)

The aqueous polyolefin wax dispersion (B) is a component contained along with the aqueous acrylic resin dispersion (A) in the aqueous base component (I). The aqueous polyolefin wax dispersion (B) has a form in which wax is dispersed in an aqueous medium.

Examples of the polyolefin wax include synthetic wax. Examples of the synthetic wax as the polyolefin wax include polyolefin waxes such as polyethylene, polypropylene, polyethylene oxide, polypropylene oxide, ethylene vinyl acetate, chlorinated polyethylene, and chlorinated polypropylene. The aqueous coating composition may contain other waxes (for example, polytetrafluoroethylene wax, silicon wax, etc.) as long as it contains the aqueous polyolefin wax dispersion (B).

Examples of a method for preparing the aqueous polyolefin wax dispersion (B) include:
a method where the wax is dissolved in a hydrophilic organic solvent and then the solution is mechanically dispersed in an aqueous solvent;
a method where the polyolefin wax is dispersed in an aqueous solvent using a surfactant or a polymer emulsifier; and
a method where an α,β-unsaturated carboxylic acid is reacted with the wax to introduce a carboxyl group, and then the introduced carboxyl group is neutralized with an organic amine or an inorganic base to emulsify and disperse in an aqueous solvent.

The aqueous polyolefin wax dispersion (B) is preferably an aqueous dispersion of at least one polyolefin wax selected from the group consisting of polyethylene, polypropylene, polyethylene oxide, polypropylene oxide, and ethylene vinyl acetate.

The aqueous polyolefin wax dispersion (B) has an average particle diameter in the range of 50 to 1,000 nm. The average particle diameter is preferably in the range of 75 to 200 nm. When the average particle diameter of the aqueous polyolefin wax dispersion (B) is less than 50 nm, the coating workability of a resulting coating composition may be poor. When the average particle diameter of the aqueous polyolefin wax dispersion (B) exceeds 1,000 nm, the transparency of a coating film formed by the aqueous coating composition may decrease. In the present description, the average particle diameter is an average particle diameter determined by a dynamic light scattering method, and specifically, it can be measured using an electrophoretic light scattering photometer ELSZ Series (manufactured by Otsuka Electronics Co., Ltd.) or the like.

The aqueous polyolefin wax dispersion (B) may be prepared by dispersing the polyolefin wax in an aqueous medium, or a commercially available product thereof may be used. Examples of commercially available products include the SAIVINOL Series manufactured by Saiden Chemical Industry Co., Ltd., the AQUACER Series manufactured by BYK Chemie, the SUPERCHLON Series manufactured by Nippon Paper Group, the Arrowbase Series manufactured by Unitika Ltd., and the CHEMIPEARL Series manufactured by Mitsui Chemicals, Inc.

The amount of the aqueous polyolefin wax dispersion (B) contained in the aqueous coating composition, expressed by the amount of wax (amount of active ingredient), is preferably in the range of 0.1 to 5.0 parts by mass and more preferably in the range of 0.35 to 4.2 parts by mass per 100 parts by mass of the resin solid content of the acrylic aqueous dispersion resin (A). The content of the aqueous polyolefin wax dispersion (B) in the above-mentioned range is advantageous in that the resulting coating composition is superior in coating workability (anti-sagging property) and a resulting coating film is superior in finished appearance.

The aqueous coating composition containing both the specific aqueous polyolefin wax dispersion (B) and the specific organic solvent (D) described below has an advantage that the aqueous coating composition ensures good coating workability and can provide a coating film having a good coating film appearance.

### Water-dispersible polyisocyanate (C)

The aqueous coating composition comprises an aqueous base component (I) and a water-dispersible curing agent (II). The water-dispersible curing agent (II) comprises a water-dispersible polyisocyanate (C). The water-dispersible polyisocyanate (C) refers to a polyisocyanate compound with a water dispersibility and it can be dispersed without separation when added to an aqueous medium. The water-dispersible polyisocyanate (C) may be one modified with a hydrophilic compound having a hydrophilic group, if necessary. The hydrophilic group may be an ionic hydrophilic group or a nonionic hydrophilic group.

The polyisocyanate compound contained in the water-dispersible polyisocyanate is not particularly limited as long as it does not deviate from the scope of the present invention. Examples thereof include aromatic diisocyanates such as tolylene diisocyanate (TDI), 4,4'-diphenylmethane diisocyanate (MDI), xylylene diisocyanate (XDI), and metaxylylene diisocyanate (MXDI); aliphatic diisocyanates such as hexamethylene diisocyanate (HDI), alicyclic polyisocyanates such as isophorone diisocyanate (IPDI); and their multimers of biuret type, isocyanurate type, trimethylolpropane (TMP) adduct type, and the like. Mixtures of two or more of these polyisocyanates are also available.

Preferably, the polyisocyanate is an aliphatic diisocyanate and/or an alicyclic polyisocyanate, and more preferably hexamethylene diisocyanate (HDI) and/or isophorone diisocyanate (IPDI). Such a polyisocyanate compound is lower in reactivity than aromatic isocyanate compounds and can suppress side reactions with an aqueous medium such as water.

The polyisocyanate chain may be modified as desired without departing from the scope of the present invention, and a crosslinking reaction may occur due to isocyanate groups contained in the polyisocyanate. Since the polyisocyanate compound that is a multimer is trifunctional or more, at least one of the multiple isocyanate groups may be modified, or at least two isocyanate groups may cause a crosslinking reaction.

The content of the water-dispersible polyisocyanate (C) in the aqueous coating composition is preferably a quantity that provides an equivalent ratio (NCO/OH) of the isocyanate groups of the water-dispersible polyisocyanate (C) to the hydroxyl groups of the aqueous acrylic resin dispersion (A) in the range of 0.5 to 3.0, and more preferably in the range of 0.8 to 2.0. The equivalent ratios are values converted in terms of solid content. The equivalent ratio (NCO/OH) in the above range affords an advantage that the curing reactivity of the aqueous coating composition can be ensured in a good range.

### Organic solvent (D)

In the aqueous coating composition, at least one of the aqueous base component (I) and the water-dispersible curing agent (II) comprises an organic solvent (D) wherein the aqueous base component comprises the aqueous acrylic resin dispersion (A) and the aqueous polyolefin wax dispersion (B), and wherein the water-dispersible curing agent (II) comprises the water-dispersible polyisocyanate (C). The organic solvent (D) is an organic solvent that has a solubility in water at 20°C of 0.1 to 14 g/100gH₂O and a boiling point in the range of 150 to 230°C. The use of the organic solvent (D) affords an advantage that a coating film can be formed with superiority in finished appearance and coating film performance.

The organic solvent (D) preferably comprises at least one species selected from the group consisting of an aliphatic ester-based organic solvent, an alicyclic ester-based organic solvent, and a cyclic ketone-based organic solvent. Examples of the aliphatic ester-based organic solvent include 2-butoxyethyl acetate (butyl cellosolve acetate), 3-methoxy-3-methylbutyl acetate, and ethyl 3-ethoxypropionate. Examples of the alicyclic ester-based organic solvent include cyclohexanol acetate. Examples of the cyclic ketone-based organic solvent include isophorone and cyclohexanone.

The content of the organic solvent (D) in the aqueous coating composition is preferably in the range of 7 to 45 parts by mass, more preferably in the range of 10 to 30 parts by mass per 100 parts by mass of the total resin solid content of the aqueous acrylic resin dispersion (A) and the water-dispersible polyisocyanate (C). The content of the organic solvent (D) in the above range provides an advantage that the coating workability can be ensured to be good and the physical performance of a resulting coating film can be ensured to be in a good range.

The aqueous coating composition containing the specific organic solvent (D) in addition to the aqueous polyolefin wax dispersion (B) provides an advantage in obtaining a coating film with a good coating film appearance as well as ensuring good coating workability.

The aqueous coating composition may further comprise an organic solvent other than the organic solvent (D) as long as it contains the organic solvent (D).

The mass ratio (D)/(B) of the content of the organic solvent (D) to the active ingredient content of the aqueous polyolefin wax dispersion (B) in the aqueous coating composition is preferably in the range of 5 to 150, and more preferably in the range of 8 to 55. The mass ratio (D)/(B) in the above range provides an advantage in obtaining a coating film with a good coating film appearance as well as ensuring good coating workability.

### Other components

In addition to the components described above, the aqueous coating composition may comprise other components as necessary depending on the purpose and application. Examples of such other components include, for example, pigments, resin particles, resin components, dispersants, curing catalysts, viscosity modifiers, film-forming aids, and additives commonly used in coating compositions (for example, UV absorbers, light stabilizers, antioxidants, defoaming agents, surface conditioning agents, antipinholing agents, and rust inhibitors). These components may be added to the base component and/or the curing agent in a manner that does not impair the physical characteristics of the coating composition of the present disclosure.

The aqueous base component (I) and the water-dispersible curing agent (II) comprise a water component such as ion-exchanged water or distilled water.

### Methods for preparing aqueous coating composition and forming coating film

The aqueous coating composition can be prepared by mixing each of the components described above by a method known to those skilled in the art. As a method for preparing the coating composition, methods commonly used by those skilled in the art can be used. For example, there can be used methods commonly used by those skilled in the art, such as a kneading and mixing means using a kneader or a roll, or a dispersing and mixing means using a sand grinding mill or a disperser.

Regarding the mixing timing of the aqueous base component (I) and the water-dispersible curing agent (II) in the aqueous coating composition, the aqueous base component (I) and the water-dispersible curing agent (II) may be mixed before use and then applied by an ordinary application method. Alternatively, application may be carried out by a method where the respective liquids are sent to a gun with a two-component mixing gun and then mixed at a gun tip.

By applying the aqueous coating composition to an article to be coated and then curing it, a coating film can be formed on the article. Examples of the article to be coated include a metal substrate, a plastic substrate, a composite substrate thereof, wood, glass, cloth, concrete, and ceramic materials. Examples of the metal substrate include metals such as iron, steel, copper, aluminum, tin, and zinc, and alloys containing such metals. The metal substrate may be plated with zinc, copper, chromium or the like, or may be surface-treated with a surface treatment agent such as chromic acid, zinc phosphate or a zirconium salt. Examples of the plastic substrate include polypropylene resin, polycarbonate resin, urethane resin, polyester resin, polystyrene resin, ABS resin, vinyl chloride resin, and polyamide resin and the like. These plastic substrates may be provided with primer coating.

The article to be coated may be a molded article including the above-mentioned substrate. Examples of the molded article include various molded articles such as an automobile body, various vehicle bodies, and parts for home electric appliances. The aqueous coating composition can be particularly suitably used when, for example, the article to be coated is a metal substrate or the like which has a large heat capacity or a large size and to which heat does not sufficiently transfer in a heating furnace. Specific examples of such an article to be coated include construction machines (for example, bulldozers, scrapers, hydraulic shovels, digging machines, transport machines (trucks, trailers, or the like), cranes/cargo handling machines, foundation construction machines (diesel hammers, hydraulic hammers, or the like), tunnel construction machines (boring machines, or the like), road rollers, or the like); industrial machines such as light and heavy electrical equipment for general industries, agricultural machines, steel furniture, machine tools, and large vehicles; and articles that have a large heat capacity or a large size and do not easily allow the temperature to rise when heated (for example, railroad vehicles, hulls, buildings, and constructed structures).

The articles to be coated mentioned above, such as industrial machines, construction machines, railroad vehicles, hulls, buildings or constructed structures, are generally large and have thick constituent substrates (steel plates) in order to withstand a strong load, in comparison with automobile bodies, and they are characterized by their large heat capacity. Therefore, such an article to be coated has a problem that heat does not sufficiently transfer to the article in a heating furnace. One of the features of the aqueous coating composition is that it can be cured at a low temperature. The aqueous coating composition has an advantage that it can be suitably used for coating of an article that has a large heat capacity or a large size and is difficult to be subjected to high temperature heat-curing after the coating.

The method for applying the aqueous coating composition is not particularly limited, and examples thereof include application methods commonly used such as immersion, brush, roller, roll coater, air spray, airless spray, curtain flow coater, roller curtain coater, and die coater. In the above spray coating, a two-component mixing gun may be used if necessary. These can be appropriately selected according to the article to be coated.

The aqueous coating composition is applied such that the dry film thickness after forming a coating film is 20 to 200 um, preferably 30 to 100 µm. The curing temperature of the aqueous coating composition is preferably in the range of 20°C to 150°C, and more preferably in the range of 40°C to 100°C. The curing time may be appropriately chosen depending on the curing temperature, and may be, for example, between 10 minutes and 7 days.

The aqueous coating composition is a two-component aqueous coating composition comprising the aqueous base component (I) and the water-dispersible curing agent (II). The aqueous coating composition is characterized by comprising the specific aqueous polyolefin wax dispersion (B) and the specific organic solvent (D) in addition to the aqueous acrylic resin dispersion (A) and the water-dispersible polyisocyanate (C). In the aqueous coating composition, for example, the use of a urethane-associating viscous agent or the like has been studied as a means for suppressing the sagging generation of the coating composition on an article during the coating operation. However, when such a viscous agent is employed to prevent the sagging generation, the appearance of the resulting coating film tends to deteriorate.

In order to solve such technical problems, the above-described aqueous coating composition comprises the specific aqueous polyolefin wax dispersion (B) and the specific organic solvent (D). It was experimentally revealed that the sagging generation after coating can be effectively prevented and the appearance of the resulting coating film (performance to prevent the generation of bubbles, gloss value, dust compatibility, transparency, etc.) can be sustained at a high level by the virtue of comprising the above two components. The above-described aqueous coating composition has an advantage in the superior coating workability since the sagging generation after coating is suppressed, and the resulting coating film is good in the appearance. Further, the aqueous coating composition has an advantage that both of the coating workability and the finished appearance of a coating film can be achieved at a high level even under a wide range of coating environments such as a high temperature and high humidity coating environment and a low temperature coating environment.

### EXAMPLES

The present invention will be described more specifically with reference to the following examples, and the present invention is not limited to the examples. In the examples, "parts" and "%" are on a mass basis unless otherwise indicated.

### (Example 1)

### Preparation of aqueous coating composition

### (Aqueous base component)

227.3 parts by mass (solid concentration: 44% by mass) of BURNOCK WD-551 (A-1) as the aqueous acrylic resin dispersion (A) and 10.0 parts by mass (solid concentration: 20% by mass) of AQUATIX-8421 (B-4) as the aqueous polyolefin wax dispersion (B) were mixed and stirred with a disperser to obtain an aqueous base component 1.

### (Water-dispersible curing agent)

69.5 parts by mass (solid concentration: 100% by mass) of Bayhydur 304 (C-1) as the water-dispersible polyisocyanate (C) and 35.3 parts by mass of 2-butoxyethyl acetate (D-3) as the organic solvent (D) were mixed and stirred with a disperser to obtain a water-dispersible curing agent 1.

### Formation of coating film

After degreasing a JIS G 3141 (SPCC ~ SD) cold-rolled steel sheet having a thickness of 0.8 mm and dimensions of 70 mm × 150 mm with a solvent, a coating composition including Uniepoch 30 Primer NC (manufactured by Nippon Paint Industrial Coatings Co., Ltd.) as a base component and Uniepoch 30 Primer curing agent (manufactured by Nippon Paint Industrial Coatings Co., Ltd.) as a curing agent was mixed as a solvent-type primer coating material using a disperser, then it was applied with a spray gun such that a dry film thickness was to be 30 to 50 um, and dried at 23°C for one day.

Next, a coating composition including naxBES Non-Sanding Primer-Surfacer HS (manufactured by Nippon Paint Industrial Coatings Co., Ltd.) as a base component and naxBES Non-Sanding Primer-Surfacer Hardener HS (manufactured by Nippon Paint Industrial Coatings Co., Ltd.) as a curing agent was mixed using a disperser, then applied as a surfacer (intermediate coating) coating material with a spray gun to the surface of the primer coating film on the cold-rolled steel sheet such that a dry film thickness was to be 40 to 50 µm, and dried at 23°C for one day.

Next, the aqueous base component (I) and the water-dispersible curing agent (II) obtained above were mixed with a disperser in the formulation shown in Table 1 below, and applied on the surface of the surfacer coating film with a spray gun such that a dry film thickness was to be 30 to 50 µm, and dried at 60°C for one hour. The application conditions were adjusted to a temperature of 25°C and a humidity of 50% RH.

### (Examples 2 to 5)

An aqueous base component (I) and a water-dispersible curing agent were prepared by the same procedure as in Example 1. A coating film was formed by the same procedure as in Example 1 except that the application was performed under the application conditions (temperature and humidity) shown in Table 1 below. The blending amounts shown in Tables 1 and 2 below are the amounts of solids (active ingredients) (parts by mass).

### (Examples 6 to 25 and Comparative Examples 1 to 8)

Aqueous coating compositions were prepared in the same manner as in Example 1 except that the type and amount of the aqueous acrylic resin dispersion (A), the aqueous polyolefin wax dispersion (B), the water-dispersible polyisocyanate (C), and the organic solvent (D) in the preparation of the aqueous base component (I) and the water-dispersible curing agent (II) were changed to those shown in Tables 1 and 2 below.

Using the obtained aqueous coating compositions, coating films were formed by the same procedure as in Example 1.

### (Comparative Example 9)

An aqueous coating composition was prepared in the same manner as in Example 1 except that 58.0 parts by mass of a water-nondispersible polyisocyanate Desmodur N-3400 (solid concentration: 100% by mass) was used instead of the water-dispersible polyisocyanate (C) in the preparation of the aqueous base component (I) and the water-dispersible curing agent (II).

Using the obtained aqueous coating compositions, coating films were formed by the same procedure as in Example 1.

Physical properties of the coating films obtained in the examples and the comparative examples were evaluated based on the following criteria. The results of the evaluations are shown in the following tables.

### Coating workability

Using the aqueous coating compositions prepared in the examples and the comparative examples, the sagging generation limit film thickness and the bubbles generation limit film thickness were measured.

A 10-point perforated zinc phosphate-treated plate (100 mm × 300 mm) was used as an article to be coated with the aqueous coating compositions. The aqueous coating compositions were applied by air spray coating under the following conditions.

### <Air spray coating conditions>

Discharge: Return 3 turns from fully closed
Air pressure: 0.3 MPa
Distance from the article to the gun: 30 cm

### <Coating method>

The article to be coated was held substantially vertically and was coated by the following procedure.

Step 1. Apply a thin film coating to the article.

Step 2. Dry at room temperature for 10 minutes.

Step 3. Apply a thin film coating from the hole on the left edge to the right edge.

Step 4. Dry at room temperature for 1 minute.

Step 5. Coating with a few centimeters shift from the left edge.

Step 6. Dry at room temperature for 1 minute.

Step 7. Coat with a few centimeters shift to the right from the coating start position in Step 5.

Step 8. Repeat Steps 6 and 7 to make a coated plate with a film thickness gradient from the left edge to the right edge.

Step 9. After drying at room temperature for 30 minutes, dry the coating in a jet oven at 60°C for 1 hour.

Step 10. Measure the film thickness on both sides of the hole where the coating material sags within 5 mm, calculate the average value, and use the obtained value as a sagging limit film thickness.

Step 11. Measure the film thickness in front of the bubbles in the article, calculate the average value, and use the obtained value as a bubbles limit film thickness.

The evaluation criteria for the sagging limit film thickness are as follows.
⊙: No sagging generated even when the film thickness was 70 um or more.
○: Sagging generated when the film thickness was 60 um or more and less than 70 um.
Δ: Sagging generated when the film thickness was 45 µm or more and less than 60 um.
×: Sagging generated when the film thickness was less than 45 um.

The evaluation criteria for the bubbles limit film thickness are as follows.
⊙: No bubbles generated even when the film thickness was 80 um or more.
O: Bubbles generated when the film thickness was 70 µm or more and less than 80 um.
Δ: Bubbles generated when the film thickness was 60 um or more and less than 70 um.
×: Bubbles generated when the film thickness was less than 60 µm

### 20° and 60° gloss values

The gloss values (20° and 60° gloss values) of the coating films obtained in the examples and the comparative examples were measured with a gloss meter GM-268A (manufactured by Konica Minolta, Inc.) and evaluated according to the following criteria.
20° Gloss value
⊙: 85 or more
○: 80 or more and less than 84
Δ: 75 or more and less than 80
×: Less than 75
60° Gloss value
⊙: 90 or more
○: 85 or more and less than 90
Δ: 80 or more and less than 85
×: Less than 80

### Evaluation of dust compatibility

Using the aqueous coating compositions prepared in the examples and the comparative examples, the dust compatibility was evaluated.

A tin plate (400 mm × 600 mm) was used as an article to be coated with the aqueous coating composition. The aqueous coating compositions were applied by air spray coating under the following conditions.

### <Air spray coating conditions>

Discharge: Return 2 turns from fully closed
Air pressure: 0.25MPa

### <Coating method>

The article to be coated was held substantially vertically and was coated by the following procedure.

Step 1. Apply thin film coating (gun distance 30 cm) to the article.

Step 2. Dry at room temperature for 10 minutes.

Step 3. Stand at an angle of 45° from the article to be coated and at a gun distance of 150 cm, and blow dust for 10 seconds.

Step 4. Dry at room temperature for 10 seconds.

Step 5. Repeat Steps 3 and 4 five times in total.

Step 9. Dry in a jet oven at 60°C for 1 hour.

The obtained coating films were visually observed and evaluated according to the following criteria.
5: No dust is found.
4: Dust is found on a very few parts of the evaluation plate.
3. Dust is found on a part of the evaluation plate.
2: Dust is found on about half of the evaluation board.
1: Dust is found on the entire surface of the evaluation plate.

### Evaluation of transparency of coating film

The appearance of the coating films obtained in the examples and the comparative examples was visually observed and evaluated according to the following criteria.
5: No clouding is observed in the coating film.
4: Slight clouding is observed in the coating film.
3: Clouding is observed in a part of the coating film.
2: Clouding is remarkable in the coating film.
1: Clouding is observed on the entire surface of the coating film.

### Evaluation of water resistance

The test evaluation plates with a coating film formed in the examples and the comparative examples were immersed in water at 40°C for 168 hours, and then the appearance of the coating film was visually observed and evaluated according to the following criteria.
⊙: No abnormality (blister) generates on the coating film.
○: There is a blister with a diameter of less than 1 mm on a part of the coating film.
△: There is a blister with a diameter of 1 mm or more and less than 2 mm on a part of the coating film.
×: There is a blister with a diameter of 2 mm or more on a part of the coating film.

**[Table 1]**

| | | (Example 1) | Example 2 | Example 3 | Example 4 | Example 5 | Exampl e 6 | Exampl e 7 | Exampl e 8 | Exampl e 9 | Example 10 | Example 11 | Example 12 | Example 13 | Example 14 | Example 15 | Example 16 | Example 17 | Example 18 |
|---|---|---|---|---|---|---|---|---|---|---|---|---|---|---|---|---|---|---|---|
| Aqueous acrylic resin dispersion (A) | (A-1) | 100.0 | 100.0 | 100.0 | 100.0 | 100.0 | | | | 100.0 | 100.0 | 100.0 | 100.0 | 100.0 | 100.0 | 100.0 | 100.0 | 100.0 | 100.0 |
| | (A-2) | | | | | | 100.0 | | | | | | | | | | | | |
| | (A-3) | | | | | | | 100.0 | | | | | | | | | | | |
| | (A-4) | | | | | | | | 100.0 | | | | | | | | | | |
| Aqueous polyolefin wax dispersion (B) | (B-1) | | | | | | | | | 1.2 | | | | | | | | | |
| | (B-2) | | | | | | | | | | 2.0 | | | | | | | | |
| | (B-3) | | | | | | | | | | | 2.0 | | | | | | | |
| | (B-4) | 2.0 | 2.0 | 2.0 | 2.0 | 2.0 | 2.0 | 2.0 | 2.0 | | | | 2.0 | 2.0 | 2.0 | 2.0 | 2.0 | 2.0 | 2.0 |
| | (B-5) | | | | | | | | | | | | | | | | | | |
| Aqueous polyamide wax dispersion | | | | | | | | | | | | | | | | | | | |
| Water-dispersible polyisocyan ate (C) | (C-1) | 69.5 | 69.5 | 69.5 | 69.5 | 69.5 | 69.5 | 93.8 | 29.9 | 69.5 | 69.5 | 69.5 | 52.2 | 64.4 | 69.5 | 69.5 | 69.5 | 69.5 | 69.5 |
| | (C-2) | | | | | | | | | | | | | 15.0 | | | | | |
| | (C-3) | | | | | | | | | | | | 17.4 | | | | | | |
| Water-nondispersible polyisocyanate | | | | | | | | | | | | | | | | | | | |
| Organic solvent (D) | (D-1) | | | | | | | | | | | | | | 35.3 | | | | |
| | (D-2) | | | | | | | | | | | | | | | | | | |
| | (D-3) | 35.3 | 35.3 | 35.3 | 35.3 | 35.3 | 35.3 | 35.3 | 35.3 | 35.3 | 35.3 | 35.3 | 35.3 | 35.3 | | 12.0 | 13.9 | 60.0 | 70.0 |
| | (D-4) | | | | | | | | | | | | | | | | | | |
| | (D-5) | | | | | | | | | | | | | | | | | | |
| | (D-6) | | | | | | | | | | | | | | | | | | |
| | (D-7) | | | | | | | | | | | | | | | | | | |
| | (D-8) | | | | | | | | | | | | | | | | | | |
| | (D-9) | | | | | | | | | | | | | | | | | | |
| | (D-10) | | | | | | | | | | | | | | | | | | |
| Total | | 206.8 | 206.8 | 206.8 | 206.8 | 206.8 | 206.8 | 231.1 | 167.2 | 206.1 | 206.9 | 206.9 | 206.9 | 216.7 | 206.8 | 183.5 | 185.4 | 231.5 | 241.5 |
| Total resin solid content of (A) and (C) (parts by mass) | | 169.5 | 169.5 | 169.5 | 169.5 | 169.5 | 169.5 | 193.8 | 129.9 | 169.5 | 169.5 | 169.5 | 169.5 | 179.4 | 169.5 | 169.5 | 169.5 | 169.5 | 169.5 |
| Active ingredient content (parts by mass) of (B) per 100 parts by mass of resin solid content of (A) | | 2.0 | 2.0 | 2.0 | 2.0 | 2.0 | 2.0 | 2.0 | 2.0 | 1.2 | 2.0 | 2.0 | 2.0 | 2.0 | 2.0 | 2.0 | 2.0 | 2.0 | 2.0 |
| Content (parts by mass) of (D) per 100 parts by mass of resin solid content of (A) and (C) | | 20.9 | 20.9 | 20.9 | 20.9 | 20.9 | 20.9 | 18.2 | 27.2 | 20.9 | 20.9 | 20.9 | 20.8 | 19.7 | 20.9 | 7.1 | 8.2 | 35.4 | 41.3 |
| Mass ratio of solid content of (B) to content of (D) [(D)/(B)] | | 18 | 18 | 18 | 18 | 18 | 18 | 18 | 18 | 29 | 18 | 18 | 18 | 18 | 18 | 6 | 7 | 30 | 35 |
| Equivalent ratio of isocyanate groups of (C) to hydroxyl groups of (A) (NCO/OH) | | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 |
| Sagging limit film thickness | | ⊙ | ⊙ | ⊙ | ⊙ | ⊙ | ⊙ | ⊙ | ⊙ | ⊙ | ⊙ | ⊙ | ⊙ | ⊙ | ⊙ | ○ | ○ | ○ | ○ |
| Bubbles limit film thickness | | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ |
| 20° gloss value | | ⊙ | ⊙ | ⊙ | ⊙ | ⊙ | ⊙ | ⊙ | ⊙ | ○ | ○ | ○ | ⊙ | ⊙ | ⊙ | ⊙ | ⊙ | ⊙ | ⊙ |
| 60° gloss value | | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ |
| Dust compatibility | | 5 | 5 | 5 | 5 | 5 | 5 | 5 | 5 | 4 | 4 | 4 | 5 | 5 | 5 | 5 | 5 | 5 | 5 |
| Transparency | | 5 | 5 | 5 | 5 | 5 | 5 | 5 | 5 | 4 | 4 | 4 | 5 | 5 | 5 | 5 | 5 | 5 | 5 |
| Water resistance | | ○ | ○ | ○ | ○ | ○ | ○ | ○ | ○ | ○ | ○ | ○ | ○ | ○ | ○ | ○ | ○ | ○ | ○ |
| Coating conditions (temperature/humidity RH%) | | 25°C/50 % | 37°C/2 8% | 11°C/2 6% | 12°C/8 2% | 36°C/8 2% | 25°C/50% | | | | | | | | | | | | |

**[Table 2]**

| | | Examp le 19 | Examp le 20 | Examp le 21 | Examp le 22 | Examp le 23 | Examp le 29 | Examp le 25 | Comparative Example 1 | Comparative Example 2 | Comparative Example 3 | Comparative Example 4 | Comparative Example 5 | Comparative Example 6 | Comparative Example 7 | Comparative Example 8 | (Comparative Example 9) |
|---|---|---|---|---|---|---|---|---|---|---|---|---|---|---|---|---|---|
| Aqueous acrylic resin dispersion (A) | (A-1) | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| | (A-2) | | | | | | | | | | | | | | | | |
| | (A-3) | | | | | | | | | | | | | | | | |
| | (A-4) | | | | | | | | | | | | | | | | |
| Aqueous polyolefin wax dispersion (B) | (B-1) | | | | | | | | | | | | | | | | |
| | (B-2) | | | | | | | | | | | | | | | | |
| | (B-3) | | | | | | | | | | | | | | | | |
| | (B-4) | 0.35 | 0.6 | 4.2 | 2.0 | 2.0 | 2.0 | 2.0 | 2.0 | | | 2.0 | 2.0 | 2.0 | 2.0 | | 2.0 |
| | (B-5) | | | | | | | | | | | | | | | 4.0 | |
| Aqueous polyamide wax dispersion | | | | | | | | | | | 2.0 | | | | | | |
| Water-dispersible polyisocyanat e (C) | (C-1) | 69.5 | 69.5 | 69.5 | 69.5 | 69.5 | 69.5 | 69.5 | 69.5 | 69.5 | 69.5 | 69.5 | 69.5 | 69.5 | 69.5 | 69.5 | |
| | (C-2) | | | | | | | | | | | | | | | | |
| | (C-3) | | | | | | | | | | | | | | | | |
| Water-nondispersible polyisocyanate | | | | | | | | | | | | | | | | | 58.0 |
| Organic solvent (D) | (D-1) | | | | | | | | | | | | | | | | |
| | (D-2) | | | | 35.3 | | | | | | | | | | | | |
| | (D-3) | 35.3 | 35.3 | 35.3 | | | | | | 35.3 | 35.3 | | | | | 35.3 | 35.3 |
| | (D-4) | | | | | 35.3 | | | | | | | | | | | |
| | (D-5) | | | | | | 35.3 | | | | | | | | | | |
| | (D-6) | | | | | | | 35.3 | | | | | | | | | |
| | (D-7) | | | | | | | | | | | 35.4 | | | | | |
| | (D-8) | | | | | | | | | | | | 35.3 | | | | |
| | (D-9) | | | | | | | | | | | | | 35.3 | | | |
| | (D-10) | | | | | | | | | | | | | | 35.3 | | |
| Total | | 205.2 | 205.4 | 209.0 | 206.8 | 206.8 | 206.8 | 206.8 | 171.5 | 204.8 | 206.8 | 206.8 | 206.8 | 206.8 | 206.8 | 208.8 | 195.3 |
| Total resin solid content of (A) and (C) (parts by mass) | | 169.5 | 169.5 | 169.5 | 169.5 | 169.5 | 169.5 | 169.5 | 169.5 | 169.5 | 169.5 | 169.5 | 169.5 | 169.5 | 169.5 | 169.5 | 158.0 |
| Active ingredient content (parts by mass) of (B) per 100 parts by mass of resin solid content of (A) | | 0.3 | 0.3 | 4.2 | 2.0 | 2.0 | 2.0 | 2.0 | 2.0 | - | - | 2.0 | 2.0 | 2.0 | 2.0 | 4.0 | 2.0 |
| Content (parts by mass) of (D) per 100 parts by mass of resin solid content of (A) and (C) | | 20.9 | 20.9 | 20.9 | 20.9 | 20.9 | 20.9 | 20.9 | 0.0 | 20.9 | 20.9 | 20.9 | 20.9 | 20.9 | 20.9 | 20.8 | 22.3 |
| Mass ratio of solid content of (B) to content of (D) [(D)/(B)] | | 101 | 59 | 8 | 18 | 18 | 18 | 18 | 0 | - | - | 18 | 18 | 18 | 18 | 9 | 18 |
| Equivalent ratio of isocyanate groups of (C) to hydroxyl groups of (A) (NCO/OH) | | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 |
| Sagging limit film thickness | | ○ | ○ | ○ | ○ | ○ | ○ | ○ | Δ | × | ⊙ | ⊙ | ⊙ | Δ | × | ○ | |
| Bubbles limit film thickness | | ⊙ | ⊙ | ⊙ | ○ | ○ | ○ | ⊙ | ⊙ | - | ⊙ | ⊙ | ⊙ | ⊙ | ⊙ | ⊙ | |
| 20° gloss value | | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ | |
| 60° gloss value | | ⊙ | ⊙ | ⊙ | ⊙ | ⊙ | ⊙ | ⊙ | ⊙ | ⊙ | ⊙ | ⊙ | ⊙ | ⊙ | ⊙ | ⊙ | |
| Dust compatibility | | 5 | 5 | 4 | 5 | 4 | 4 | 4 | 5 | 5 | 3 | 4 | 5 | 3 | 5 | 2 | |
| Transparency | | 5 | 5 | 5 | 5 | 5 | 5 | 5 | 5 | 5 | 3 | 3 | 5 | 4 | 5 | 1 | |
| water resistance | | ○ | ○ | ○ | ○ | ○ | ○ | ○ | ○ | ○ | ○ | ○ | × | ○ | ○ | ○ | |
| Coating conditions (temperature/humidity RH%) | | 25°C/50% | | | | | | | 25°C 50% | | | | | | | | |

The aqueous acrylic resin dispersion (A) and the water-dispersible polyisocyanate (C) in the above tables are as follows.

### Aqueous acrylic resin dispersion (A)

(A-1): BURNOCK WD-551; acrylic dispersion manufactured by DIC Corporation, acid value: 8.5 mgKOH/g, hydroxyl value: 100 mgKOH/g, number-average molecular weight: 4,600, solid concentration: 44% by mass
(A-2): A2470; acrylic dispersion manufactured by Sumika Bayer Urethane Co., Ltd., acid value: 20 mgKOH/g, hydroxyl value: 129 mgKOH/g, number-average molecular weight: 4,300, solid concentration: 45% by mass
(A-3): MACRYNAL VSM 6299W/42WA; acrylic dispersion manufactured by Allnex, acid value: 25mgKOH/g, hydroxyl value: 135mgKOH/g, number-average molecular weight: 6,500, solid concentration: 42% by mass
(A-4): COATAX WE 804; acrylic dispersion manufactured by Toray Industries, Inc., acid value: 37.7 mgKOH/g, hydroxyl value: 43 mgKOH/g, number-average molecular weight: 7,000, solid concentration: 50% by mass

### Water-dispersible polyisocyanate (C)

(C-1): Bayhydur 304: Nonion-modified polyisocyanate manufactured by Sumika Bayer Urethane Co., Ltd., an nonion-modified polyisocyanate (prepared by introducing an allophanate group by adding an HDI trimer to a urethane group generated in advance by adding a hydrophilic polyether to an HDI trimmer, having a nonion-type hydrophilic group, and further having an allophanate group introduced into an isocyanate chain), solid concentration: 100% by mass
(C-2): Bayhydur 401-70; nonion-type modified hydrophilic polyisocyanate (IPDI) manufactured by Sumika Bayer Urethane Co., Ltd., solid concentration: 70% by mass
(C-3): Bayhydur 3100: hydrophilic polyisocyanate (HDI) manufactured by Covestro AG, solid concentration: 100% by mass

### Water-nondispersible polyisocyanate

Desmodur N-3400; HDI uretdione manufactured by Covestro AG, solid concentration: 100% by mass.

The details of the aqueous polyolefin wax dispersion (B) and the organic solvent (D) in the above tables are shown in Tables 3 and 4 below.

**[Table 3]**

| Aqueous wax dispersion | Trade name | Manufacturer name | Content of active ingredient (mass%) | Average particle diameter (nm) |
|---|---|---|---|---|
| Aqueous polyolefin wax dispersion (B-1) | SUPERCHLON E-415 | Nippon Paper Industries | 30 | 75 |
| Aqueous polyolefin wax dispersion (B-2) | AQUACER497 | BYK | 50 | 150 |
| Aqueous polyolefin wax dispersion (B-3) | AQUACER498 | BYK | 50 | 300 |
| Aqueous polyolefin wax dispersion (B-4) | AQUATIX8421 | BYK | 20 | 150 |
| Aqueous polyolefin wax dispersion (B-5) | CHEMIPEARL W400 | Mitsui Chemicals | 40 | 4,000 |
| Aqueous polyamide wax dispersion | AQ-630 | Kusumoto Chemicals | 5.5 | - |

**[Table 4]**

| Organic solvent (D) | Compound name | Solubility in water (g/100gH₂O) | Boiling point (°c) |
|---|---|---|---|
| Organic solvent (D-1) | Cyclohexanol acetate | 0.2 | 173 |
| Organic solvent (D-2) | 3-Methoxy-3-methylbutyl acetate | 0.7 | 188 |
| Organic solvent (D-3) | 2-Butoxyethyl acetate | 1.1 | 192 |
| Organic solvent (D-4) | Isophorone | 1.2 | 215 |
| Organic solvent (D-5) | Ethyl 3-ethoxypropionate | 2.9 | 165 |
| Organic solvent (D-6) | Cyclohexanone | 9.4 | 156 |
| Organic solvent (D-7) | Xylene | 0.02 | 139 |
| Organic solvent (D-8) | Dibutyl diglycol | 0.3 | 255 |
| Organic solvent (D-9) | Propylene glycol monomethyl ether acetate | 18.5 | 146 |
| Organic solvent (D-10) | Carbitol acetate | 100 | 217 |

All the aqueous coating compositions of the examples had a high sagging generation limit film thickness and good coating workability. Further, it was confirmed that all the coating films formed by using the aqueous coating compositions of the examples had a good coating film appearance. Furthermore, as shown in Examples 1 to 5, when the aqueous coating compositions of the examples were used, it was confirmed that the sagging generation limit film thickness was high and the coating workability was high, and the appearance of the coating film was good under all of the following coating conditions: a suitable temperature and a suitable humidity (Example 1), a high-speed drying condition with a high temperature and a low humidity (Example 2), a low temperature and a low humidity (Example 3), a bad drying condition with a low temperature and a high humidity (Example 4), and a high temperature and a high humidity (Example 5). From these results, it can be seen that the aqueous coating composition can achieve both coating workability and finished appearance of a coating film at high level even under a wide variety of coating environment.

Comparative Example 1 is an example in which the organic solvent (D) is not contained. In this example, it was confirmed that the sagging limit film thickness was low and the coating workability was poor.

Comparative Example 2 is an example in which the aqueous polyolefin wax dispersion (B) is not contained. In this example, it was confirmed that the sagging limit film thickness was extremely low and the coating workability was significantly poor. It was also confirmed that the bubbles limit film thickness was extremely low and the appearance of the coating film was poor.

Comparative Example 3 is an example in which an aqueous polyamide wax solution was used instead of the aqueous polyolefin wax dispersion (B). In this example, it was confirmed that the dust compatibility evaluation and the transparency of the coating film were poor.

Comparative Examples 4 to 7 are examples in which an organic solvent outside the definition of the organic solvent (D) was used instead of the organic solvent (D). In these examples, it was confirmed that the sagging limit film thickness was low and the coating workability was poor, or the dust compatibility was poor, or the coating film drying property was poor.

Comparative Example 8 is an example in which the average particle diameter of the aqueous wax dispersion exceeded 1000 nm. In this example, it was confirmed that the dust compatibility and transparency were poor.

Comparative Example 9 is an example in which Desmodur N-3400 (manufactured by Covestro AG; HDI uretdione), which is a water-nondispersible polyisocyanate compound, was used instead of the water-dispersible polyisocyanate (C). In this example, the water-nondispersible polyisocyanate compound was not uniformly dispersed, the obtained coating film was not uniform, and a stable coating film was not obtained.

### INDUSTRIAL APPLICABILITY

The above-described aqueous coating composition has an advantage that it has good coating workability because it can effectively prevent the sagging generation after coating and it can further hold the appearance of a resulting coating film (performance to prevent the occurrence of bubbles, gloss value, dust compatibility, transparency, etc.) at a high level.

## Claims

1. An aqueous coating composition comprising an aqueous base component (I) and a water-dispersible curing agent (II),
wherein the aqueous base component (I) comprises an aqueous acrylic resin dispersion (A) and an aqueous polyolefin wax dispersion (B),
wherein the water-dispersible curing agent (II) comprises a water-dispersible polyisocyanate (C),
wherein at least one of the aqueous base component (I) and the water-dispersible curing agent (II) comprises an organic solvent (D) having a solubility in water at 20°C of 0.1 to 14 g/100gH₂O and a boiling point in the range of 150 to 230°C,
wherein the aqueous acrylic resin dispersion (A) has a hydroxyl value in the range of 5 to 200 mgKOH/g, an acid value in the range of 5 to 100 mgKOH/g, and a number-average molecular weight in the range of 1,000 to 100,000,
wherein the aqueous polyolefin wax dispersion (B) has an average particle diameter in the range of 50 to 1,000 nm,
wherein the hydroxyl value and the acid value of the aqueous acrylic resin dispersion (A) are both measured by the methods in accordance with JIS K 0070,
wherein the number average molecular weight of the aqueous acrylic resin dispersion (A) is measured by gel permeation chromatography using polystyrene standards, and
wherein the average particle diameter of the aqueous polyolefin wax dispersion (B) is measured by electrophoretic light scattering photometer.

2. The aqueous coating composition according to claim 1, wherein the organic solvent (D) comprises at least one species selected from the group consisting of an aliphatic ester-based organic solvent, an alicyclic ester-based organic solvent, and a cyclic ketone-based organic solvent.

3. The aqueous coating composition according to claim 1 or 2, wherein the organic solvent (D) is contained in the water-dispersible curing agent (II).

4. The aqueous coating composition according to any one of claims 1 to 3, wherein an active ingredient content of the aqueous polyolefin wax dispersion (B) is 0.35 to 4.20 parts by mass with respect to 100 parts by mass of a resin solid content of the aqueous acrylic resin dispersion (A).

5. The aqueous coating composition according to any one of claims 1 to 4, wherein a content of the organic solvent (D) is 7 to 45 parts by mass with respect to 100 parts by mass of a total resin solid content of the aqueous acrylic resin dispersion (A) and the water-dispersible polyisocyanate (C).

6. A method for forming a coating film comprising a step of forming a coating film by applying the aqueous coating composition according to any one of claims 1 to 5 to an article and then curing the aqueous coating composition to form a coating film.

7. The method for forming a coating film according to claim 6, wherein the article is an industrial machine, a construction machine, a railroad vehicle, a hull, a building or a constructed structure.

## Patentansprüche

1. Wässrige Beschichtungszusammensetzung, die eine wässrige Basiskomponente (I) und ein in Wasser dispergierbares Härtungsmittel (II) umfasst,
wobei die wässrige Basiskomponente (I) eine wässrige Acrylharz-Dispersion (A) und eine wässrige Polyolefinwachs-Dispersion (B) umfasst,
wobei das in Wasser dispergierbare Härtungsmittel (II) ein in Wasser dispergierbares Polyisocyanat (C) umfasst,
wobei zumindest eine aus der wässrigen Basiskomponente (I) und dem in Wasser dispergierbaren Härtungsmittel (II) ein organisches Lösungsmittel (D) mit einer Löslichkeit in Wasser bei 20 °C von 0,1 bis 14 g/100 g H₂O und einen Siedepunkt im Bereich von 150 °C bis 230 °C aufweist,
wobei die wässrige Acrylharz-Dispersion (A) eine Hydroxylzahl im Bereich von 5 bis 200 mg KOH/g, eine Säurezahl im Bereich von 5 bis 100 mg KOH/g sowie ein zahlenmittleres Molekulargewicht im Bereich von 1.000 bis 100.000 aufweist, wobei die wässrige Polyolefinwachs-Dispersion (B) einen durchschnittlichen Partikeldurchmesser im Bereich von 50 bis 1.000 nm aufweist,
wobei die Hydroxylzahl und die Säurezahl der wässrigen Acrylharz-Dispersion (A) beide durch Verfahren gemäß JIS K 0070 gemessen werden,
wobei das zahlenmittlere Molekulargewicht der wässrigen Acrylharz-Dispersion (A) durch Gelpermeationschromatographie unter Verwendung von Polystyrolstandards gemessen wird und der durchschnittliche Partikeldurchmesser der wässrigen Polyolefinwachs-Dispersion (B) mit einem elektrophoretischen Lichtstreuungsphotometer gemessen wird.

2. Wässrige Beschichtungszusammensetzung nach Anspruch 1, wobei das organische Lösungsmittel (D) zumindest eine Spezies, ausgewählt aus der aus einem organischen Lösungsmittel auf Basis aliphatischer Ester, einem organischen Lösungsmittel auf Basis alizyklischer Ester und einem organischen Lösungsmittel auf Basis zyklischer Ketone bestehenden Gruppe umfasst.

3. Wässrige Beschichtungszusammensetzung nach Anspruch 1 oder 2, wobei das organische Lösungsmittel (D) in dem in Wasser dispergierbaren Härtungsmittel (II) enthalten ist.

4. Wässrige Beschichtungszusammensetzung nach einem der Ansprüche 1 bis 3, wobei der Gehalt an aktiven Bestandteilen der wässrigen Polyolefinwachs-Dispersion (B) 0,35 bis 4,20 Massenteile, bezogen auf 100 Massenteile des Harz-Feststoffgehalts der wässrigen Acrylharz-Dispersion (A) beträgt.

5. Wässrige Beschichtungszusammensetzung nach einem der Ansprüche 1 bis 4, wobei der Gehalt des organischen Lösungsmittels (D) 7 bis 45 Massenteile, bezogen auf 100 Massenteile des gesamten Harz-Feststoffgehalts der wässrigen Acrylharz-Dispersion (A) und des in Wasser dispergierbaren Polyisocyanats (C) beträgt.

6. Verfahren zur Ausbildung eines Beschichtungsfilms, das einen Schritt des Ausbildens eines Beschichtungsfilms durch Aufbringen einer wässrigen Beschichtungszusammensetzung nach einem der Ansprüche 1 bis 5 auf einen Gegenstand und des anschließenden Härtens der wässrigen Beschichtungszusammensetzung umfasst, um einen Beschichtungsfilm auszubilden.

7. Verfahren zur Ausbildung eines Beschichtungsfilms nach Anspruch 6, wobei der Gegenstand eine Industriemaschine, eine Baumaschine, ein Schienenfahrzeug, ein Schiffsrumpf, ein Gebäude oder eine Bauwerkstruktur ist.

## Revendications

1. Composition de revêtement aqueuse comprenant un composant de base aqueuse (I) et un agent de durcissement dispersible dans l'eau (II),
dans laquelle le composant de base aqueuse (I) comprend une dispersion de résine acrylique aqueuse (A) et une dispersion de cire de polyoléfine aqueuse (B),
dans laquelle l'agent de durcissement dispersible dans l'eau (II) comprend un polyisocyanate dispersible dans l'eau (C),
dans laquelle au moins l'un du composant de base aqueuse (I) et de l'agent de durcissement dispersible dans l'eau (II) comprend un solvant organique (D) présentant une solubilité dans l'eau à 20°C de 0,1 à 14 g/100g de H₂0 et un point d'ébullition dans la plage de 150 à 230°C,
dans laquelle la dispersion aqueuse de résine acrylique (A) présente un indice d'hydroxyle dans la plage de 5 à 200 mg de KOH/g, un indice d'acide dans la plage de 5 à 100 mg de KOH/g et un poids moléculaire moyen en nombre dans la plage de 1 000 à 100 000,
dans laquelle la dispersion de cire de polyoléfine aqueuse (B) présente un diamètre de particule moyen dans la plage de 50 à 1000 nm,
dans laquelle l'indice d'hydroxyle et l'indice d'acide de la dispersion de résine acrylique aqueuse (A) sont tous deux mesurés par les procédés conformes à la norme JIS K 0070,
dans laquelle le poids moléculaire moyen en nombre de la dispersion de résine acrylique aqueuse (A) est mesuré par chromatographie par perméation de gel en utilisant des étalons de polystyrène, et
dans laquelle le diamètre de particule moyen de la dispersion de cire de polyoléfine aqueuse (B) est mesuré par un photomètre à diffusion de lumière électrophorétique.

2. Composition de revêtement aqueuse selon la revendication 1, dans laquelle le solvant organique (D) comprend au moins une espèce choisie dans le groupe constitué d'un solvant organique à base d'ester aliphatique, d'un solvant organique à base d'ester alicyclique et d'un solvant organique à base de cétone cyclique.

3. Composition de revêtement aqueuse selon la revendication 1 ou 2, dans laquelle le solvant organique (D) est contenu dans l'agent de durcissement dispersible dans l'eau (II).

4. Composition de revêtement aqueuse selon l'une quelconque des revendications 1 à 3, dans laquelle une teneur en ingrédient actif de la dispersion de cire de polyoléfine aqueuse (B) est de 0,35 à 4,20 parties en masse par rapport à 100 parties en masse d'une teneur en solide de résine de la dispersion de résine acrylique aqueuse (A).

5. Composition de revêtement aqueuse selon l'une quelconque des revendications 1 à 4, dans laquelle une teneur du solvant organique (D) est de 7 à 45 parties en masse par rapport à 100 parties en masse d'une teneur en solide de résine totale de la dispersion de résine acrylique aqueuse (A) et du polyisocyanate dispersible dans l'eau (C).

6. Procédé de formation d'un film de revêtement comprenant une étape consistant à former un film de revêtement en appliquant la composition de revêtement aqueuse selon l'une quelconque des revendications 1 à 5 sur un article et ensuite à durcir la composition de revêtement aqueuse pour former un film de revêtement.

7. Procédé de formation d'un film de revêtement selon la revendication 6, dans lequel l'article est une machine industrielle, une machine de construction, un véhicule ferroviaire, une coque, un bâtiment ou une structure construite.
